Europäisches Patentamt

European Patent Office

Office européen des brevets

(11) Numéro de publication: **0 554 140 B1**

(12) **FASCICULE DE BREVET EUROPEEN**

(45) Date de publication du fascicule du brevet: **20.09.95**

(51) Int. Cl.⁶: **C01F 5/30**, C01F 5/00, C08F 10/00

(21) Numéro de dépôt: **93400119.9**

(22) Date de dépôt: **19.01.93**

(54) **Procédé de fabrication de MgC12, MgO de répartition granulométrique étroite, application de ce composé comme support de composante catalytique de polymérisation des oléfines.**

(30) Priorité: **27.01.92 FR 9200820**

(43) Date de publication de la demande:
**04.08.93 Bulletin 93/31**

(45) Mention de la délivrance du brevet:
**20.09.95 Bulletin 95/38**

(84) Etats contractants désignés:
**AT BE DE ES FR GB IT NL PT SE**

(56) Documents cités:
**EP-A- 0 449 673**
**WO-A-90/09402**
**GB-A- 1 559 172**

(73) Titulaire: **ELF ATOCHEM S.A.**
**4 & 8, Cours Michelet**
**La Défense 10**
**F-92800 Puteaux (FR)**

(72) Inventeur: **Spitz, Roger**
**44 rue des Fleurs,**
**Serezin**
**F-69369 St. Symphorien d'Ozon (FR)**
Inventeur: **Patin, Maryse**
**Rue de la Cité, 12**
**B-4000 Liège (BE)**
Inventeur: **Brun, Claude**
**Clos St. Pierre**
**F-64320 Idron (FR)**

## Description

La présente invention concerne un procédé de fabrication de $MgCl_2$, MgO, de répartition granulométrique étroite par traitement de $MgCl_2$ hydraté dans un alcool. Le traitement permet de provoquer le réarrangement granulométrique des particules de $MgCl_2$ hydraté initial. Les phénomènes les plus apparents qui se produisent au cours du réarrangement granulométrique sont la disparition des fines particules et la disparition des grosses particules de $MgCl_2$ hydraté initial avec l'apparition des particules dont la distribution granulométrique est resserrée.

Le $MgCl_2$, MgO obtenu peut être utilisé comme support catalytique, en particulier dans les composantes de catalyseur du type Ziegler Natta. Ces composantes catalytiques utilisées dans la polymérisation des oléfines présentent l'avantage de produire des polymères de distribution étroite de taille de particules, ce qui confère une bonne facilité de mise en oeuvre.

Il est connu de traiter les supports $MgCl_2$, MgO en présence de composés hydroxylés, comme par exemple dans le cas du GB 1 559 172, mais il s'agit seulement dans tous les cas de former des complexes possédant des fonctions hydroxyles, sans se préoccuper de la distribution granulométrique du produit final. Selon tous ces traitements le complexe final reste sensiblement identique au $MgCl_2$, MgO initial avec ses fines et ses grosses particules.

Les particules de $MgCl_2$, MgO de répartition granulométrique, exprimée en

$$\underline{D90}, \\ D10$$

inférieure à 9, D90 représentant le diamètre en dessous duquel se trouvent 90 % en masse des particules et D10 représentant le diamètre en dessous duquel se trouvent 10 % en masse des particules, sont obtenues par
- traitement de $MgCl_2$ hydraté par un alcool, puis
- application d'un traitement thermique de façon à former le $MgCl_2$, MgO,

  caractérisé en ce que pour le traitement de $MgCl_2$ hydraté par un alcool, le $MgCl_2$ hydraté est mis en suspension dans l'alcool, le rapport molaire alcool sur $MgCl_2$ hydraté étant inférieur au rapport de solubilité de ces deux corps a la température de la suspension, puis les particules de $MgCl_2$ sont separées de l'alcool saturé de $MgCl_2$.

Dans ces conditions il est necessaire que le milieu reste biphasique et tel qu'il contienne suffisamment d'alcool pour maintenir du $MgCl_2$ en suspension.

L'alcool adapté au procédé est choisi parmi les monoalcools linéaires ou ramifiés possédant un nombre de carbone de 4 à 16.

Dans les conditions opératoires recommandées, la mise en suspension s'effectue de façon classique en mettant en contact avec l'alcool, de préférence sous agitation, le $MgCl_2$ hydraté de structure quelconque. Le $MgCl_2$ est maintenu en suspension pendant un temps suffisant, généralement plus de 3 heures pour permettre le gonflement à coeur des particules par l'alcool. Afin d'obtenir les meilleurs résultats, il est recommandé d'opérer pendant la durée de la mise en oeuvre du procédé sensiblement à une température de 0 à 150 °C de préférence de 60 à 120 °C, sachant que, comme déjà précisé, du $MgCl_2$ doit rester en suspension dans l'alcool sursaturé.

Une fois cette opération de réarrangement des particules terminée, les particules de $MgCl_2$ hydraté en suspension sont séparées de l'alcool saturé de $MgCl_2$, de préférence lavées par exemple par un hydrocarbure et de préférence séchées avant d'être traitées thermiquement à une température généralement comprise entre 300 °C et 600 °C de façon à former le $MgCl_2$, MgO sans détruire le réarrangement granulométrique. Le traitement de séchage se fait habituellement sous vide ou encore en lit fluidisé en milieu de gaz inerte préalablement séché.

Le $MgCl_2$, MgO obtenu contient habituellement de 15 à 40 % en poids de MgO. La taille moyenne des particules de $MgCl_2$, MgO est généralement de 5 à 200 $\mu m$ et mieux de 10 à 120 $\mu m$ pour une distribution granulométrique resserrée. Habituellement la largeur de distribution granulométrique exprimée en

$$\underline{D90} \\ D10$$

est inférieure à 9 et plus généralement inférieure à 7. D90 est le diamètre en-dessous duquel se trouvent 90 % en masse des particules et D10 est le diamètre en-dessous duquel se trouvent 10 % en masse des particules.

Le $MgCl_2$ hydraté initial est un $MgCl_2$, x $H_2O$, avec $0,3 \leqq x \leqq 12$. Cet $MgCl_2$ hydraté est habituellement un $MgCl_2$, $6H_2O$ commercial ou obtenu en hydratant ou deshydratant ce $MgCl_2$, $6H_2O$ commercial.

Une composante catalytique de catalyseur du type Ziegler-Natta peut être obtenue essentiellement par combinaison du $MgCl_2$, MgO selon l'invention avec un composé de métal de transition. C'est ainsi qu'une telle composante peut être obtenue par dépôt sur le $MgCl_2$, MgO d'un composé du titane, du vanadium, du zirconium et/ou d'hafnium, de préférence halogéné et plus particulièrement du $TiCl_4$, $TiCl_3$, du $TiCl_n(OR)_{4-n}$ avec $O \leq n \leq 3$ et R représentant un radical hydrocarboné saturé de 1 à 12 carbones, du $VCl_3$, $VCl_4$ ou $VOCl_3$, $HfCl_4$ ou $ZrCl_4$. Cette composante catalytique associée à un cocatalyseur choisi parmi les composés organométalliques des métaux I à III du tableau périodique et plus particulièrement les composés d'aluminium, sert de catalyseur de polymérisation ou copolymérisation des oléfines linéaires ou ramifiées comme l'éthylène, le propylène, le butène-1, l'hexène-1, l'octène-1, le 4-méthylpentène-1, le butadiène-1-3, le 1-9-décadiène.

Au moins un donneur d'électrons peut être ajouté à la composante catalytique lors de sa fabrication et/ou au cocatalyseur. Ce donneur d'électrons peut être par exemple choisi parmi les bases de Lewis, les esters et polyesters d'acides oxygénés, les éthers et polyéthers, les amines, les composés du silicium tels que les silanes et les alkylalkoxysilanes de formule $SiR_1R_2(OR)_2$, $SiR_1(OR)_3$ ou $SiR_1R_2R_3(OR)$, les différents R étant des radicaux hydrocarbonés de 1 à 12 carbones, ainsi que les composés du phosphore tels que les phosphates et les phosphonates, les préférés étant les esters ou polyesters alcoylés d'acide aromatique, les mono ou diéthers d'alcoyle, les alkoxysilanes et les alkylalkoxysilanes.

Le catalyseur obtenu à partir d'une composante fabriquée à partir du $MgCl_2$, MgO de l'invention convient à tous les types de polymérisation des oléfines : en haute et basse pression, en suspension, en phase gazeuse ou en masse.

La taille des particules de composante catalytique et leur distribution granulométrique resserrée sont comparables à celles du $MgCl_2$, MgO selon l'invention utilisé comme support.

La composante catalytique peut avantageusement être préparée par imprégnation, de façon connue, des particules de $MgCl_2$, MgO par un composé de métal de transition liquide ou en solution comportant un ou plusieurs atomes d'halogène et particulièrement du chlore. Préalablement à cette imprégnation ou en même temps, il peut être recommandé de procéder au dépôt d'au moins un des donneurs d'électrons déjà cités.

La composante catalytique obtenue, associée à un cocatalyseur classique, habituellement choisi parmi les composés organoaluminiques tels que les aluminoxanes, les aluminosiloxanes, les composés comportant des liaisons Al-R-Al ou R représente un groupement alcoyle, ou, de formule $AlX_qR's$ dans laquelle X représente Cl ou OR' avec R' désignant un radical alcoyle en $C_1$ à $C_{16}$ et de préférence $C_1$ à $C_{12}$ tandis que q et s sont des nombres tels que $1 \leq s \leq 3$, $0 \leq q \leq 2$ avec $q + s = 3$, forme un catalyseur adapté à la polymérisation des oléfines et plus particulièrement de l'éthylène, du propylène, du butène-1, du 4-méthyle pentène-1 et de l'hexène-1, de l'octène, du butadiène-1-3, ou, de leurs mélanges. Au cocatalyseur, il n'est pas exclu d'associer au moins un donneur d'électrons tel que défini précédemment. La composante catalytique et le cocatalyseur sont associés dans des proportions telles que le rapport molaire d'aluminium contenu dans le cocatalyseur au métal de transition de ladite composante se situe entre 0,5 et 2000 et de préférence entre 1 à 1000.

La polymérisation des oléfines précitées et en général des oléfines en $C_2$ à $C_{12}$ prises seules ou en mélanges, au moyen du système catalytique défini précédemment peut être mise en oeuvre, en solution ou en suspension dans un milieu liquide inerte et notamment dans un hydrocarbure aliphatique tel que le n-heptane, le n-hexane, l'isohexane, l'isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles qui sont habituellement proposées pour des cas similaires faisant appel à des systèmes catalytiques conventionnels de type Ziegler Natta supporté ou non.

Par exemple pour une polymérisation conduite en suspension ou en solution dans un milieu liquide inerte, on peut opérer à des températures allant jusqu'à 250°C et sous des pressions allant de la pression atmosphérique à 250 bars. Dans le cas d'une polymérisation en milieu propylène liquide, les températures peuvent aller jusqu'à la température critique et les pressions peuvent être comprises entre la pression atmosphérique et la pression critique. Pour une polymérisation ou copolymérisation de l'éthylène en masse conduisant à des polyéthylènes ou à des copolymères majoritaires en éthylène, on peut opérer à des températures comprises entre 130°C et 350°C et sous des pressions allant de 200 à 3500 bars.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène ou de propylène et d'une ou plusieurs oléfines en $C_2$ à $C_{12}$ telles que éthylène, propylène, butène-1, hexène-1, méthyl-4 pentène-1 et octène-1, renfermant, lorsqu'il est au contact du système catalytique, une proportion molaire de comonomères en $C_2$ à $C_{12}$ comprise entre 0,1 et 90 %, et de préférence entre 1 et 60 %.

La polymérisation en phase gazeuse de l'oléfine ou des oléfines au contact du système catalytique peut être effectuée dans tout réacteur permettant une polymérisation en phase gazeuse et en particulier dans un réacteur à lit agité et/ou à lit fluidisé. Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou copolymère à synthétiser, et plus particulièrement comprise entre +20°C et (Tf -5)°C, et sous une pression telle que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, de manière à contrôler l'indice de fluidité du polymère ou copolymère à produire. L'agent de transfert de chaînes préféré est l'hydrogène, que l'on utilise en quantité pouvant aller jusqu'à 90 %, et se situant de préférence entre 0,1 et 60 % du volume de l'ensemble oléfines et hydrogène amené au réacteur.

La composante de métal de transition ci-dessus présentée peut également être utilisée pour la préparation d'un prépolymère actif, qui est utilisable seul ou en association avec un cocatalyseur choisi parmi les composés d'aluminium définis précédemment.

Ledit prépolymère actif est obtenu en mettant en contact une ou plusieurs alpha-oléfines en $C_2$ à $C_{12}$ avec un système catalytique formé en associant la composante de métal de transition suivant l'invention avec un cocatalyseur choisi parmi les composés cités plus haut dans ce but et employés dans les proportions indiquées précédemment, ladite oléfine ou lesdites oléfines en $C_2$ à $C_{12}$ étant utilisées en quantité représentant 2 à 500 grammes et de préférence 2 à 100 grammes de l'oléfine ou des oléfines en $C_2$ à $C_{12}$ par gramme de la composante de métal de transition.

La composante catalytique ci-dessus présentée est particulièrement intéressante dans la polymérisation ou la copolymérisation de l'éthylène ou du propylène ou de leurs mélanges entre eux ou avec une autre oléfine en ce qu'elle permet d'obtenir des polymères ou des copolymères de granulométrie étroite avec absence de fines particules, de bonne coulabilité et d'indice de fluidité adapté aux applications habituelles.

Les polyoléfines ou les copolymères d'oléfines obtenus sont constitués de particules dont la taille moyenne est généralement comprise de 100 à 2000 $\mu$m et plus particulièrement de 200, à 1500 $\mu$m. Habituellement la largeur de distribution granulométrique

$$\frac{D90}{D10}$$

des poudres est inférieure à 10 et plus généralement inférieure à 8, leur masse volumique apparente (mva), mesurée selon la norme ASTM D1895-méthode A, étant généralement comprise entre 0,3 et 0,6 $g/cm^3$.

Les exemples suivants illustrent l'invention sans toutefois la limiter.

EXEMPLE 1

Sous argon, 74,6 g de ($MgCl_2$, 6HO) sont mis en contact avec 55 ml d'éthyl-2 hexanol. Le tout est porté à 95°C sous agitation pendant 6 heures. Après filtration, la suspension obtenue est diluée avec de l'heptane, puis lavée quatre fois à l'abri de l'air avec 100 ml d'heptane. Elle est ensuite séchée sous vide à la température ambiante à 40°C. Le solide A est obtenu.

33,9 g du solide A subissent un traitement thermique sous vide à 300°C pendant 2 heures, la montée en température du four étant de 10°C/minute. Sont obtenus 15,3 g de solide B qui est du $MgCl_2$-MgO à 23 % en poids de MgO.

La taille moyenne des particules est de 72 $\mu$m pour un

$$\frac{D90}{D10}$$

de 5,6 avant le traitement thermique et respectivement de 71 $\mu$m et de 5,1 après le traitement thermique.

EXEMPLE 2

Sous argon 24,8 g de ($MgCl_2$, $6H_2O$) sont mis en contact avec 21 ml d'éthyl-2 hexanol. Le tout est porté à 95°C sous agitation pendant 6 heures. Le solide est lavé quatre fois, à l'abri de l'air, avec 100 ml d'heptane et séché sous vide de la température ambiante à 120°C. 10,3 g de ce solide C subissent le traitement thermique sous vide suivant :

-  montée à 120°C à 10°C/minute
-  montée à 350°C à 6°C/minute-palier de 2 heures à 350°C

- montée à 450°C à 10°C/minute-palier de 30 minutes à 450°C

On obtient 7,5 g de solide D MgCl₂-MgO contenant 34 % en poids de MgO.

3,1 g de solide D sont mis en contact à l'abri de l'air avec 20 ml de TiCl₄ pendant 2 heures à 90°C. Après un lavage avec 100 ml d'heptane, le solide obtenu est séché sous vide à température ambiante. On obtient un solide E contenant 2,1 % en poids de titane.

La composante catalytique E est engagée en polymérisation en suspension. Dans un réacteur d'un litre en inox muni d'une agitation par paie tournant à 750 tours/minute, on introduit dans l'ordre à température ambiante sous atmosphère inerte : 500 ml d'heptane, le triisobutylaluminium (3 mM) et 70 mg de la composante catalytique E. On ajoute l'hydrogène jusqu'à une pression partielle de 1,9 bar et on complète avec de l'éthylène en ajustant la pression pour atteindre 8 bars absolus de pression totale après chauffage à 80°C. Cette pression totale est maintenue constante pendant 1 heure par addition d'éthylène. Au bout d'une heure on arrête l'injection d'éthylène et on refroidit à température ambiante. Le catalyseur est désactivé par addition d'une solution de méthanol légèrement acidifiée par de l'acide chlorhydrique à 10 %. La suspension de polymère est filtrée puis séchée.

La masse volumique apparente du polymère est de 0,43 g/cm³, la taille moyenne des particules de polymère est de 550 μm pour un

$$\frac{D90}{D10}$$

de 3,1.

EXEMPLE 3

Sous argon 27,1 g de (MgCl₂, 6H₂O) sont mis en contact avec 25 ml d'éthyl-2-hexanol. Le tout est porté à 95°C sous agitation pendant 6 heures. La suspension obtenue est lavée quatre fois, à l'abri de l'air, avec 100 ml d'heptane et séchée sous vide de la température ambiante à 100°C.

Le solide obtenu subit un traitement thermique sous vide à 450°C tel que décrit dans l'Exemple 2. On obtient 11,4 g de solide F MgCl₂-MgO contenant 17,5 % en poids de MgO.

La composante catalytique G est préparée dans les conditions de la composante E de l'Exemple 2 . On obtient le solide G contenant 2,4 % en poids de titane.

La composante catalytique G est engagée en polymérisation en suspension dans les conditions de l'Exemple 2 avec 2,1 bars d'hydrogène.

La masse volumique apparente du polymère est de 0,38 g/cm³, la taille moyenne des particules de polymère est de 211 μm pour un

$$\frac{D90}{D10}$$

DE 6,3.

EXEMPLE 4 (comparatif)

Sous argon, 10,4 g de (MgCl₂, 6H₂O) sont mis en contact avec 7,5 ml de tétrahydrofurane. Le tout est porté à 80°C sous agitation pendant 2 heures. Le solvant est éliminé par décantation et siphonnage. Le solide H obtenu est séché sous vide de la température ambiante à 120°C.

Le solide H subit un traitement thermique sous vide à 300°C pendant 2 heures (montée de la température du four : 10°C/minute). On obtient 5,0 g de solide I MgCl₂ ne contenant pas de quantité significative de MgO.

EXEMPLE 5 (comparatif)

19,2 g de (MgCl₂, 6H₂O) sont traités thermiquement sous vide à 500°C pendant 2 heures (montée en température à 10°C/minute). On obtient 7,2 g de solide J MgCl₂-MgO contenant 35 % en poids de MgO.

6,5 g du solide J subissent un traitement d'activation par broyage, sous argon. Le solide est broyé pendant 8 heures en présence d'adamantane : 5 % en poids dans un bol de broyage contenant un jeu de billes d'acier. Le solide K obtenu est ensuite lavé trois fois avec 100 ml d'heptane.

Le solide K est mis en contact à l'abri de l'air avec 40 ml de TiCl₄ pendant 2 heures à 80°C. Puis le solide est lavé trois fois avec 100 ml d'heptane. Le solide obtenu est séché sous vide à température ambiante. On obtient un solide L contenant 1,9 % en poids de titane.

La composante catalytique L est engagée en polymérisation dans les conditions de l'Exemple 2 avec du trihexylaluminium et 3 bars d'hydrogène.

La masse volumique apparente du polymère est de 0,38 g/cm³, la taille moyenne des particules de polymère est de 180 μm pour un

$$\frac{D90}{D10}$$

de 15

EXEMPLE 6

Sous argon, 13,4 g de (MgCl$_2$,6H$_2$O) sont mis en contact avec 12 ml de n-hexanol. Le tout est porté à 95°C sous agitation pendant 8 heures. La suspension obtenue est lavée quatre fois, à l'abri de l'air, avec 100 ml d'heptane et séchée sous vide de la température ambiante à 160°C.

Le solide obtenu subit un traitement thermique sous vide à 450°C tel que décrit dans l'Exemple 2. On obtient 4,8 g de solide M MgCl$_2$-MgO contenant 40 % en poids de MgO.

La composante catalytique N est préparée dans les conditions de la composante E de l'Exemple 2. On obtient le solide N contenant 2,0 % en poids de titane.

La composante catalytique N est engagée en polymérisation en suspension dans les conditions de l'Exemple 2 avec 2 bars d'hydrogène.

La masse volumique apparente du polymère est de 0,36 g/cm$^3$, la taille moyenne des particules de polymère est de 360 $\mu$m pour un

$$\frac{D90}{D10}$$

de 4,7.

**Revendications**

1. Procédé de fabrication de particules de MgCl$_2$,MgO de répartition granulométrique, exprimée en

$$\frac{D90}{D10},$$

inférieure à 9, D90 représentant le diamètre en dessous duquel se trouvent 90 % en masse des particules et D10 représentant le diamètre en dessous duquel se trouvent 10 % en masse des particules, par
   - traitement de MgCl$_2$ hydraté par un alcool, puis
   - application d'un traitement thermique de façon à former le MgCl$_2$, MgO,
   caractérisé en ce que pour le traitement de MgCl$_2$ hydraté par un alcool, le MgCl$_2$ hydraté est mis en suspension dans l'alcool, le rapport molaire alcool sur MgCl$_2$ hydraté étant inférieur au rapport de solubilité de ces deux corps à la température de la suspension, puis les particules de MgCl$_2$ sont separées de l'alcool saturé de MgCl$_2$.

2. Procédé selon la revendication 1 caractérisé en ce que du MgCl$_2$ reste en suspension dans le milieu alcoolique sursaturé en MgCl$_2$.

3. Procédé selon l'une des revendications 1 ou 2 caractérisé en ce que l'alcool est choisi parmi les monoalcools linéaires ou ramifiés possédant un nombre de carbone de 4 à 16.

4. Procédé selon l'une des revendications 1 à 3 caractérisé en ce que le MgCl$_2$ est maintenu en suspension dans l'alcool pendant plus de 3 heures.

5. Procédé selon l'une des revendications 1 à 4 caractérisé en ce que la température de la suspension est de 0 à 150°C.

6. Procédé selon l'une des revendications 1 à 5 caractérisé en ce que le traitement thermique de façon à former le MgCl$_2$, MgO s'effectue à une température comprise entre 300 et 600°C.

**Claims**

1. Process for the manufacture of MgCl$_2$•MgO particles with a particle size distribution, expressed as

$$\frac{D90,}{D10}$$

of less than 9, D90 representing the diameter below which 90 % by mass of the particles are found and D10 representing the diameter below which 10 % by mass of the particles are found, by
   - treatment of MgCl$_2$ hydrate with an alcohol, then
   - application of a heat treatment so as to form MgCl$_2$•MgO,
   characterized in that, for the treatment of MgCl$_2$ hydrate with an alcohol, the MgCl$_2$ hydrate is suspended in the alcohol, the alcohol to MgCl$_2$ hydrate molar ratio being less than the solubility ratio of these two bodies at the temperature of the suspension, and then the MgCl$_2$ particles are separated from the MgCl$_2$-saturated alcohol.

2. Process according to Claim 1, characterized in that MgCl$_2$ remains in suspension in the MgCl$_2$-supersaturated alcoholic medium.

3. Process according to either of Claims 1 and 2, characterized in that the alcohol is chosen from linear or branched monoalcohols having a carbon number of 4 to 16.

4. Process according to one of Claims 1 to 3, characterized in that the $MgCl_2$ is maintained in suspension in the alcohol for more than 3 hours.

5. Process according to one of Claims 1 to 4, characterized in that the temperature of the suspension is from 0 to 150°C.

6. Process according to one of Claims 1 to 5, characterized in that the heat treatment in order to form $MgCl_2 \cdot MgO$ is carried out at a temperature of between 300 and 600°C.

**Patentansprüche**

1. Verfahren zur Herstellung von Teilchen aus $MgCl_2 \cdot MgO$ mit einer als D90/D10 ausgedrückten Teilchengrößenverteilung von weniger als 9, wobei D90 den Durchmesser darstellt, unterhalb dessen Wert 90 Gew.-% der Teilchen liegen und D10 den Durchmesser darstellt, unterhalb dessen Wert 10 Gew.-% der Teilchen liegen, wobei das Verfahren aus folgenden Schritten besteht:
    - Behandlung von $MgCl_2$-Hydrat mit einem Alkohol,
    - Einsatz einer thermischen Behandlung Zur Bildung von $MgCl_2 \cdot MgO$, dadurch gekennzeichnet, daß das $MgCl_2$-Hydrat für die Behandlung mit dem Alkohol in dem Alkohol suspendiert wird, wobei das Molverhältnis von Alkohol zu $MgCl_2$-Hydrat unterhalb des Löslichkeitsverhältnisses dieser beiden Bestandteile bei der Suspensionstemperatur liegt, und anschließend werden die $MgCl_2$-Teilchen von dem mit $MgCl_2$ gesättigten Alkohol getrennt.

2. Verfahren nach Anspruch 1, dadurch gekennzeichnet, daß das $MgCl_2$ in dem mit $MgCl_2$ übersättigten alkoholischen Medium suspendiert bleibt.

3. Verfahren nach Anspruch 1 oder 2, dadurch gekennzeichnet, daß der Alkohol ausgewählt wird aus linearen oder verzweigten Monoalkoholen mit 4 bis 16 Kohlenstoffatomen.

4. Verfahren nach einem der Ansprüche 1 bis 3, dadurch gekennzeichnet, daß das $MgCl_2$ in dem Alkohol über 3 Stunden lang suspendiert bleibt.

5. Verfahren nach einem der Ansprüche 1 bis 4, dadurch gekennzeichnet, daß die Temperatur der Suspension zwischen 0 und 150°C liegt.

6. Verfahren nach einem der Ansprüche 1 bis 5, dadurch gekennzeichnet, daß die thermische Behandlung zur Bildung von $MgCl_2 \cdot MgO$ bei einer Temperatur zwischen 300 und 600°C ausgeführt wird.